# EUROPEAN PATENT APPLICATION

(11) **EP 4 847 571 A1**
(43) Date of publication of application: **02.12.2026**
(21) Application number: 25179978.9
(22) Date of filing: 30.05.2025
(51) Int. Cl.: C09D 11/033, C09D 11/037, B01J 37/03, B33Y 70/00

(54) **SOL-GEL INKS AND METHODS FOR PRODUCING SUCH INKS**

(71) Applicant: VITO NV, 2400 Mol (BE)
(72) Inventor: MIDDELKOOP, Vesna, 2400 Mol (BE); WYNS, Kenny, 2400 Mol (BE); VOGELSANG SUÁREZ, David Felipe, 2400 Mol (BE)
(74) Representative: AWA Benelux

(57) **Abstract**

The present invention relates to a method preparing a sol-gel ink for direct ink writing (DIW) printing, comprising i) dissolving an inorganic alkoxy compound according to X(OR¹)ₓR²₄₋ₓ, wherein X is Si, Ti, Zr, Al or Ce; R¹, individually, is C₁₋₁₀ alkyl; R², individually, is C₁₋₁₀ alkyl or (CH₂)ₙ-O-CH₂-CH(O)CH₂, wherein n is between 1 and 10, or phenyl; x is 1 to 4, in an aqueous solution having a pH lower than 7 and comprising a first alcohol having a first surface tension lower than 30 mN/m, thereby obtaining a first solution having a pH lower than 7; ii) at least partially hydrolysing the inorganic alkoxy compound, thereby obtaining a hydrolysed first solution comprising a second alcohol according to R¹OH having a second surface tension; iii) adding a metal salt to the hydrolysed first solution; iv) contacting the metal salt comprising hydrolysed first solution with a solvent having a surface tension higher than the first surface tension and the second surface tension, thereby forming the sol-gel ink comprising the solvent and metal ions of the metal salt dispersed in the ink.

## Description

### Technical field

The present invention is related to sol-gel inks for direct ink writing (DIW) of catalyst scaffolds comprising one or more catalytically active materials, to methods of producing such sol-gel inks and to methods of producing catalyst scaffolds by DIW of such sol-gel inks.

### Background art

Three-dimensional (3D) printing is a promising approach for the fabrication of structured catalytic materials, such as 3D monolithic structures and 3D scaffolds with a wide variety of geometries and tailored properties. Monolith and scaffold catalysts and catalyst solid and porous supports are increasingly favoured over other catalyst types in industrial applications, primarily for their ease of handling, control of geometry and homogeneity of dispersed active material, higher external surface area, lower pressure drop and better mass and heat transfer during use. Compared with traditional manufacturing techniques, 3D printing offers great flexibility to fabricate micro/macrostructure with highly complex geometries. A frequently used technique for manufacturing 3D shaped structures makes use of material extrusion. However, when the 3D shaped structures are to comprise an active material, such as a catalytically active material and/or a magnetic material, the known 3D printing methods face certain challenges, such as the relatively limited number of materials suitable for 3D printing wherein their activity is retained during and after 3D printing. It is still a challenge to achieve an acceptable distribution of the active sites (i.e., of the active material), because the 3D printing process tends to concentrate active sites in the bulk of the matrix where their accessibility becomes limited and/or slow.

Many industrial chemical processes rely on heterogeneously catalysed reactions in the presence of a solid heterogeneous catalyst. The active surface of the heterogeneous catalyst plays an essential role in the reaction and the reaction usually takes place at the interface between the catalyst and the gas and/or liquid reaction medium. Composition of the catalytically active surface, accessibility of the catalytically active sites and catalyst surface morphology play an important role in the catalytic activity of heterogeneous catalysts. Often, heterogeneous catalysts comprise a three-dimensional porous carrier structure or support structure with a high surface area. Typical examples of materials used to build catalyst support structures include alumina, carbon and zeolites, zirconium oxide, silica etc..

A frequently used method for applying a catalytically active material to the surface of a support structure involves impregnation of the support structure with a liquid formulation comprising the catalytically active compound or a precursor thereof.

WO2005/119828 discloses a process for producing a sol-gel derived electro-conductive catalyst composite powder. The method comprises combining a first solution comprising a noble metal containing compound, for example a noble metal salt, with a second solution comprising a solvent and a metal oxyhydroxide comprising one or more of titanium, zirconium and silicon (for example an inorganic metal alkoxide), thereby forming a mixture. A third solution comprising at least one electrically conductive component, such as turbostratic or graphitic carbon, is added to the mixture. The mixture is then polymerized to form an inorganic gel, which is aged and dried to remove the solvent, thereby obtaining an electro-catalyst composite powder. An ink is prepared by mixing the electro-catalyst composite powder with a polymeric binder solution (for example an aqueous Nafion^{®} ionomer solution) and water, and the ink is suitable for coating a substrate to obtain electrocatalytic substrates.

This process has the disadvantage of requiring multiple process steps and combining multiple organic binders to obtain a printable ink. A further disadvantage is that the ink shows insufficient dimensional stability to be formed into a self-standing 3D monolith or scaffold and is only suitable for being applied in the form of a coating layer to a substrate. Said differently, 3D porous catalyst monoliths are prepared by applying a coating to an existing porous 3D structure.

3D printed microstructured Au/TiO2 catalyst for hydrogen photoproduction, A. Elkoro, L. Soler, J. Llorca and I. Casanova, Appl. Mater. Today, 2019, 16, 265-272, discloses 3D printing of a colloid ink to produce Au/TiO₂ monoliths for hydrogen photoproduction by additive superposition of microfilaments of titania-based pastes. The pastes and/or the 3D printed structure are impregnated with gold nanoparticles, i.e. by pre- and/or post- (3D printing) impregnation, respectively. Although the pre-impregnated monoliths show a homogeneous distribution of the gold nanoparticles throughout the microfilaments, the post-impregnated monoliths exhibit a much higher catalytic efficiency than the pre-impregnated monoliths, even for gold concentrations of 100 times less.

There is thus a clear need for an improved method for 3D printing of structurally stable 3D monoliths and scaffolds, with which both a more homogeneous distribution of the active material (i.e. active catalyst sites or magnetic particles) across the monolith and a high catalytic performance (e.g. catalytic efficiency, can be achieved. There is also a need for a 3D printing method which enables a great degree of control over the properties and design flexibility with which the properties of the 3D printed material can easily be modified on request.

### Summary of the invention

The present invention aims to overcome one or more of the above drawbacks. It is an aim to provide stable sol-gel inks and methods for producing such inks, wherein the sol-gel inks are particularly suitable for direct ink writing (DIW) printing of 3D scaffolds, in particular 3D catalyst scaffolds, thereby excluding the need for post-printing impregnation of the scaffold with a catalyst material. It is a further aim of this invention to provide such 3D (catalyst) scaffolds.

A further aim is to provide such sol-gel inks and methods for producing them that allow easy tuning of the ink's properties, such as the rheology, (shear thinning) viscosity, DIW printability, gelation behaviour (gelation speed), and active particles' nature, dispersion and loading.

Another aim is to provide and produce sol-gel inks having sufficient strength and dimensional and form stability to allow 3D printing of a stable structure without the need to incorporate additional binder materials, such as organic binder materials. More particularly, it is an aim to provide sol-gel inks that show a high shape fidelity and dimensional and form stability in the course of the printing process as well as once the printing process has been completed.

With a "high shape fidelity" and ""dimensional and form stability" is meant in the present disclosure that 3D structures are obtained with an excellent strength and shape stability, i.e., with an excellent geometric, mechanical and physical integrity, thus capable of being self-standing or self-supporting in the course of the 3D printing process and once the 3D printing process has been completed, and showing (almost) no structural defects such as cracks.

Yet another aim is to provide and produce sol-gel inks for 3D printing of 3D structures, in particular (catalyst) scaffolds incorporating an active material, typically metal sites, for example particles comprising or substantially consisting of the active material, which are homogeneously distributed and highly or finely dispersed in the 3D structure and exhibiting desired properties.

It will be understood that the properties of the active material, i.e., the properties that the active material adds to the 3D structure, depend on the nature and composition of the active material. Particularly preferred properties include catalytic properties and magnetic properties.

It is a further aim to provide catalyst scaffold DIW printing methods that are less complex than prior art methods, in particular allowing to print the sol-gel ink as produced, thereby excluding the need for further ink preparation steps or post-impregnation steps. It is a further aim to provide DIW printing methods allowing to obtain a 3D printed catalyst scaffold, advantageously a porous catalyst scaffold, having a homogeneous catalytic activity. Another aim is to provide DIW printing methods ensuring a high shape fidelity of the 3D printed catalyst scaffold.

In the present disclosure, the surface tension of molecules is measured according to standard ASTM D971.

According to a first aspect of the present disclosure, there is provided a method for preparing a sol-gel ink for direct ink writing (DIW) printing as set out in the appended claims.

The method comprises forming a first solution comprising an inorganic alkoxy compound; at least partially hydrolysing the inorganic alkoxy compound, thereby forming (obtaining) a hydrolysed first solution; adding a metal salt to the hydrolysed first solution; and contacting the hydrolysed first solution comprising the metal salt with a solvent.

The first solution is formed (produced, obtained) by dissolving an inorganic alkoxy compound in an aqueous solution having a pH lower than 7. The first solution thus comprises the dissolved inorganic alkoxy compound. The first solution also has a pH lower than 7.

The pH of the aqueous solution and the first solution, and of any other solution in the present disclosure, is measured according to ASTM E70.

The inorganic alkoxy compound is according to formula (I):

X(OR¹)ₓR²₄₋ₓ (I).

X is Si, Ti, Zr, Al or Ce, preferably Si or Ti.
x is between 1 and 4, preferably 3 or 4.
R¹, individually, is C₁₋₁₀ alkyl, preferably C₁₋₆ alkyl. Advantageously, R¹ is methyl, ethyl, isopropyl or n-butyl. When the compound according to formula (I) comprises two or more of R¹, they can be the same or different.
R², individually, is C₁₋₁₀ alkyl, (CH₂)ₙ-O-CH₂-CH(O)CH₂, wherein n is between 1 and 10, or phenyl, preferably C₁₋₆ alkyl. Advantageously, R² is methyl, ethyl, 3-glycidyloxypropyl ((CH₂)₃-O-CH₂-CH(O)CH₂) or phenyl. When the compound according to formula (I) comprises two or more of R², they can be the same or different.

Advantageously, the inorganic alkoxy compound is X(OR¹)₃R², wherein X is Si or Ti, R¹ is methyl, ethyl, isopropyl or n-butyl, and R² is methyl, ethyl, 3-glycidyloxypropyl or phenyl.

The aqueous solution further comprises a first alcohol. The first alcohol has a surface tension lower than 30 mN/m, preferably equal to or lower than 28 mN/m, more preferably equal to or lower than 25 mN/m, most preferably equal to or lower than 23 mN/m at 20 °C and standard atmospheric pressure.

Advantageously, the first alcohol is methanol, ethanol, iso-propanol, or combinations of two or more thereof.

The (dissolved) inorganic alkoxy compound is at least partially hydrolysed, thereby forming a hydrolysed first solution. The inorganic alkoxy compound reacts with the water in the first solution, thereby hydrolysing at least one of the alkoxy groups (OR¹) of the inorganic alkoxy compound, i.e. converting the alkoxy group into a hydroxyl group (-OH).

Advantageously, the at least partial hydrolysis of the inorganic alkoxy compound takes place simultaneously with dissolving the inorganic alkoxy compound. More precisely, once a molecule of the inorganic alkoxy compound is dissolved in the aqueous solution, at least partial hydrolysis of that molecule by the water in the aqueous solution will happen advantageously almost instantly.

During hydrolysis of the inorganic alkoxy compound, a second alcohol responding to (having) the formula R¹OH is formed. For example, when R¹ is methyl or ethyl, methanol or ethanol is formed as the second alcohol.

The second alcohol has a second surface tension, which is determined (depends on) R¹ of the inorganic alkoxy compound.

More particularly, the at least partially hydrolysed inorganic alkoxy compound is according to formula (II):

X(OR¹)_{x-z}(OH)_{z}R²₄₋ₓ (II),

wherein x, X, R¹ and R² are as described hereinabove, and z is between 1 and x.

Advantageously, the first alcohol does not participate in the hydrolysis. It will therefore be understood that the hydrolysed first solution comprises the first alcohol in addition to the at least partially hydrolysed inorganic alkoxy compound and the second alcohol.

The method further comprises adding a metal salt to the hydrolysed first solution.

Advantageously, the metal salt comprises one or more of Ni, Co, Fe, Pd, Ru, Cu, Zn, Mn, W, Mo, Pt, Ag, Au, or Na, preferably one or more of Ni, Co, Fe.

Advantageously, the metal salt is a nitrate, an acetate, a sulphate, a chloride or a carbonate.

It will be understood that two or more different metal salts can be added to the hydrolysed first solution. When two or more different metal salts are added to the hydrolysed first solution, a bi-, ter-, etc. metallic ink may be obtained.

The method further comprises contacting the metal salt comprising hydrolysed first solution with a solvent having a surface tension higher than the first surface tension and the second surface tension. It follows that the minimal surface tension that the solvent must have follows from both the composition of the first alcohol and the second alcohol, wherein the latter is defined by R¹ of the inorganic alkoxy compound. Said differently, the composition of the first alcohol and R¹ of the inorganic alkoxy compound define which solvents are suitable for use with the methods of the present invention.

During the contacting step, the solvent replaces the first and the second alcohol in a so-called solvent exchange step or solvent swap step. The solvent exchange step leads to the formation of the sol-gel ink.

The sol-gel ink comprises the solvent. The sol-gel ink further comprises metal ions of the metal salt, wherein the metal ions are dispersed in the ink. Advantageously, the ink further comprises the anion of the metal salt, i.e., the ink advantageously has an overall neutral charge.

It will be clear that the sol-gel ink can be seen as a "sol" in the field of hydrolysis and condensation processes of metal alkoxide precursors and corresponding metal-containing sol-gel derived compounds. The inventors have surprisingly found that 3D printing of the sol-gel ink of the present disclosure, i.e., as a "sol" comprising metal ions dispersed therein, is possible in a stable way. In other words, the inventors have found that it is possible to control and delay the condensation reaction of the sol (i.e, tuning of time-dependent gelation), thereby allowing printing of a 3D structure from the ink as a sol, followed by post-printing conversion of the sol into a gel.

More particularly, during the solvent exchange step, the viscosity of the ink changes, thereby obtaining an ink with an optimal viscosity for 3D printing, and in particular DIW printing. It is known that DIW printing is not necessarily limited by the nozzle size, and that the viscosity of an ink is thus of uttermost importance to allow quality printing.

Additionally, the use of the solvents as described hereinabove allows to control the evaporation of the solvent present in the ink during 3D printing. This contributes to stable 3D printing of the ink in a controlled way, and reduces the risk for structural defects in the finally obtained scaffold, while at the same time a high (and uniform) dispersion of the metal ions in the scaffold is realised. Depending on the nature of the metal salt, and in particular the metal of the metal salt, the ink and the printed scaffolds may show catalytic activity only, for example when the metal is Pt or Pd, or they may additionally show magnetic activity, for example when the metal is Fe.

It was further found that the sol-gel inks of the present disclosure have sufficient stability and binding properties, thereby excluding the need for additional binder materials. This simplifies the preparation method for the ink compared to prior art methods which often require the preparation of an ink by firstly producing a metal particles containing powder and subsequently mixing it with a binder material.

Another advantage compared to prior art processes is that the ink used for printing already comprises the active material, i.e., the metal of the metal salt, thereby excluding the need for post-printing impregnation steps.

Advantageously, the metal salt is added to the hydrolysed first solution in an amount between 0.5 % and 20 % by weight, preferably between 0.75 % and 15 % by weight, more preferably between 1 % and 10 % by weight, based on the total weight of the hydrolysed first solution prior to adding the metal salt.

Advantageously, the molar ratio of the inorganic alkoxy compound according to formula (I) and the first alcohol in the first solution is between 1:1 and 1:20, preferably between 1:1 and 1:10, more preferably between 1:2 and 1:5. Such a molar ratio allows an optimal hydrolysis of the (OR¹) groups in the inorganic alkoxy compound is according to formula (I), advantageously a complete hydrolysis, i.e., a hydrolysis wherein all (OR¹) groups are hydrolysed.

Advantageously, the molar ratio of the inorganic alkoxy compound according to formula (I) and water in the first solution is between 1:1 and 1:10, preferably between 1:1 and 1:5, more preferably between 1:2 and 1:5. The inventors have found that such a molar ratio contributes to the stability of the sol-gel ink. More particularly, condensation (polymerisation and cross-linking) of the hydrolysed first solution prior to printing of the ink can be prevented.

Advantageously, the aqueous solution further comprises an acid. Advantageously, the acid is HNO₃. It will be understood that when the aqueous solution comprises an acid, the first solution obtained from the aqueous solution also comprises the acid.

Advantageously, the solvent has a boiling temperature equal to or higher than 50 °C, preferably equal to or higher than 70 °C, more preferably equal to or higher than 80 °C at standard atmospheric pressure.

As explained hereinabove, the minimal surface tension that the solvent can have for the solvent exchange to take place depends on the first surface tension of the first alcohol and on the second surface tension of the second alcohol, which depends on R¹ of the inorganic alkoxy compound.

The inventors have found that when the solvent has a surface tension equal to or lower than 30 mN/m, preferably equal to or lower than 27.5 mN/m, and a boiling temperature of at least 50 °C, and preferably at least 80 °C, the viscosity of the resulting sol-gel inks have an optimal viscosity for 3D printing, and in particular for DIW printing. The inventors believe that this is the result of the replacement of the first and the second alcohol in the hydrolysed first solution by the solvent.

Additionally, such a solvent evaporates less easily, i.e., requires higher temperatures for evaporation, hence a controlled gelation and solidification of the ink during and after printing can be achieved. This significantly reduces the risk for the occurrence of structural defects, such as cracks, in the printed structure, and ensures an improved shape stability during printing (less risk for collapse). This higher boiling temperature further has the advantage that the ink can be printed in a controlled way in a wider range of temperatures.

Non-limiting examples of suitable solvents, albeit dependent on the first surface tension and the second surface tension as explained hereinabove, include 1-hexanol, propylene carbonate and tetraethylene glycol dimethyl ether.

An advantage of the ink preparation methods of the first aspect is that an ink comprising a (catalytically) active material is directly obtained, contrary to prior art methods which require drying of the gel comprising the catalytically active material to obtain a catalyst powder and further ink preparation steps to obtain an ink from the catalyst powder. A further advantage is that no binder materials need to be added, i.e., the sol-gel ink as prepared can be printed "as is".

According to a second aspect of the present disclosure, there is provided a method for direct ink writing (DIW) printing of a catalyst scaffold as set out in the appended claims.

The method comprises preparing a sol-gel ink by the method of the first aspect of the invention, building a 3D xerogel from the sol-gel ink, condensing the 3D xerogel and subjecting the resulting structure to a subsequent thermal treatment. As explained hereinabove, the ink comprises metal ions as active material dispersed in the ink. With active material is meant a material that is catalytically active and additionally may show magnetic activity.

The term "xerogel" is used in the present invention for a sol-gel which is dried in an ambient environment (i.e., at ambient (room) temperature, at atmospheric pressure and/or in air).

A 3D xerogel is built in a layered fashion from the sol-gel ink and comprises stacking layers of filaments of the sol-gel ink. The filaments within one layer are deposited at a distance from each other, thereby forming (macro)pores between the filaments. Filaments of consecutive layers are connected to each other at one or more connection points.

During the building step, the solvent in the sol-gel ink at least partially evaporates, preferably the solvent substantially completely evaporates. Upon evaporation, the solvent is replaced in the printed structure by gas from the surrounding atmosphere, for example air. It will be understood that the building step is to be performed at conditions, in particular temperature and pressure, that allow the evaporation of the solvent. In particular, the building step is advantageously performed at a temperature lower than the boiling temperature of the solvent.

Advantageously, evaporation of the solvent also leads to at least partially gelation of the sol-gel ink.

The 3D xerogel is exposed to an alkaline environment in an exposure step. Upon exposure to an alkaline environment, condensation - polymerisation and cross-linking - of the hydrolysed inorganic alkoxy compound takes place, thereby forming a rigid, porous structure.

Advantageously, the building step and the exposure step are performed simultaneously, i.e., the 3D xerogel is advantageously built in an alkaline environment.

The condensed 3D xerogel is subjected to a thermal treatment, thereby obtaining the 3D catalyst scaffold. The 3D catalyst scaffold comprises the metal of the metal salt as catalytically active sites. Advantageously, the thermal treatment comprises calcining and/or sintering of the condensed 3D xerogel.

Advantageously, the alkaline environment is air comprising equal to or lower than 25 ppm, preferably equal to or lower than 20 ppm, more preferably equal to or lower than 10 ppm of NH₃, for example 15 ppm, wherein the NH₃ is present as vapour.

According to a third aspect of the present disclosure, there is provided a sol-gel ink as set out in the appended claims. The sol-gel ink is advantageously prepared by the methods of the first aspect of the present disclosure. The sol-gel ink is suitable for DIW printing of a catalyst scaffold.

The sol-gel ink comprises a hydrolysed inorganic alkoxy compound according to formula (II), as hereinabove described.

The sol-gel ink further comprises a metal salt, wherein metal ions of the metal salt are dispersed within the ink. The metal salt is as hereinabove described.

The sol-gel ink further comprises a solvent. The solvent is as hereinabove described, i.e., has a surface tension higher than a surface tension of a first alcohol and higher than a surface tension of a second alcohol, wherein the first alcohol has a surface tension lower than 30 mN/m at 20 °C and standard atmospheric pressure as measured according to standard ASTM D971, and wherein the second alcohol is according to R'OH.

The present disclosure is further related to the use of the sol-gel ink of the third aspect or obtained by the methods of the first aspect for DIW printing of a 3D catalyst scaffold, advantageously according to the methods of the second aspect.

### Brief description of figures

Aspects of the invention will now be described in more detail with reference to the appended drawings, wherein same reference numerals illustrate same features and wherein:
Figure 1 shows typical rheological properties of two inventive sol-gel inks.
Figures 2A and 2B show three-dimensional (3D) freshly DIW printed nickel loaded silica sol-gel derived monoliths obtained from an inventive sol-gel ink, having different geometries.
Figures 3A and 3B show the 3D DIW printed nickel loaded silica monoliths of Figure 2B after gelation in a NH₃ and after calcination and sintering, respectively.
Figures 4A, 4B and 4C show 3D DIW printed cobalt loaded monoliths obtained by DIW printing of a further inventive sol-gel ink, dried in air, after thermal treatment in air and after thermal treatment in a H₂/He atmosphere, respectively.
Figures 5A and 5B show 3D DIW printed cobalt loaded monoliths obtained by DIW printing of yet a further inventive sol-gel ink, dried in air and after thermal treatment in air, respectively.
Figures 6A and 6B show SEM images at different magnitudes and EDX images of a 3D printed nickel loaded silica xerogel monolith obtained with the inventive sol-gel ink of Figs. 2A and 2B.
Figure 7 shows EDX images of a 3D printed nickel loaded silica xerogel monolith obtained with a further inventive sol-gel ink.
Figure 8 shows EDX images of a 3D printed cobalt loaded silica xerogel monolith obtained with a further inventive sol-gel ink.
Figure 9 shows HRTEM (High Resolution Transmission Electron Microscopy) images of the 3D printed nickel loaded silica xerogel of Figures 5A and 5B.
Figure 10A and 10B show SEM images (left) EDX images (other images) of 3D printed FeCo loaded silica xerogel catalyst monoliths obtained with yet another inventive sol-gel ink, wherein the monoliths were subjected to different posttreatments.
Figure 11 shows HRTEM images of a 3D printed FeCo loaded silica xerogel catalyst monolith obtained with the same sol-gel ink as used for the monoliths of Figures 10A and 10B.
Figure 12 shows STEM (Scanning Transmission Electron Microscopy) images coupled with EDX of the 3D printed FeCo loaded silica xerogel catalyst monolith of Figure 11.
Figure 13 shows the EELS (electron energy loss spectroscopy) measurement for the same monolith of Figures 11 and 12.
Figure 14 shows the hysteresis curve obtained from magnetic hysteresis measurement performed on the 3D printed Ni-loaded silica xerogel monolith of Figures 2A and 2B.

### Description of embodiments

Methods for preparing a sol-gel ink according to the present disclosure comprise a dissolution operation, a hydrolysis operation, a metal salt addition operation and a solvent exchange operation. Advantageously, the dissolution operation and the hydrolysis operation are performed simultaneously.

The dissolution operation comprises at least partially, and preferably substantially completely, dissolving an inorganic alkoxy compound in an acidic aqueous solution comprising a first alcohol. With an "acidic" solution is meant in the present disclosure a solution having a pH lower than 7.

Advantageously, at least 20 % by weight, preferably at least 50 % by weight, more preferably at least 75 % by weight, most preferably at least 90 % by weight, in particularly substantially 100 % by weight of the inorganic alkoxy compound is dissolved in the acidic aqueous solution.

The acid pH of the aqueous solution is advantageously provided by (realised by) the presence of an acid in the aqueous solution. Said differently, the aqueous solution advantageously comprises an acid. The acid can be inorganic or organic. Non-limiting examples of inorganic acids include HNO₃, H₂SO₄ and H₃PO₄. Non-limiting examples of organic acids include acetic acid, citric acid, formic acid and oxalic acid. It will be understood that the aqueous solution can comprise two or more acids, which can exclusively be inorganic acids, exclusively organic acids, or combinations of one or more inorganic acids and one or more organic acids.

It will be understood that the concentration of the acid added to the aqueous solution depends on the nature of the acid, in particular its pKa value, and the predetermined pH of the aqueous solution. For example, when the aqueous solution is to have a pH 2, the molar ratio of the inorganic alkoxy compound and the acid in the aqueous solution is advantageously between 100:1 (1:0.001) and 20:1 (1:0.05), preferably between 400:1 (1:0.0025) and 40:1 (1:0.025), more preferably between 200:1 (1:0.005) and 100:1 (1:0.01).

The inorganic alkoxy compound is according to formula (I):

X(OR¹)ₓR²₄₋ₓ (I).

X is Si, Ti, Zr, Al or Ce, preferably Si or Ti. Said differently, the inorganic alkoxy compound according to formula (I) is advantageously Si(OR¹)ₓR²₄₋ₓ or Ti(OR¹)ₓR²₄₋ₓ.

x is between 1 and 4, preferably 3 or 4. Said differently, the inorganic alkoxy compound according to formula (I) is advantageously X(OR¹)₃R² or X(OR¹)₄.

R¹, individually, is C₁₋₂₀ alkyl, preferably C₁₋₁₀ alkyl, more preferably C₁₋₆ alkyl. R¹ can be linear or branched. Advantageously, R¹ is methyl, ethyl, isopropyl or n-butyl. When the compound according to formula (I) comprises two or more of R¹, they can be the same or different.

R², individually, is C₁₋₂₀ alkyl, (CH₂)ₙ-O-CH₂-CH(O)CH₂, wherein n is between 1 and 10, or phenyl, preferably C₁₋₁₀ alkyl, more preferably C₁₋₆ alkyl. Advantageously, R² is methyl, ethyl, 3-glycidyloxypropyl ((CH₂)₃-O-CH₂-CH(O)CH₂) or phenyl. When the compound according to formula (I) comprises two or more of R², they can be the same or different.

Advantageously, the inorganic alkoxy compound is a Si-based alkoxy compound. Non-limiting examples of Si-based inorganic alkoxy compounds include tetramethoxysilane (TMOS, wherein X is Si, x is 4 and R¹ is CH₃), tetraethoxysilane (TEOS, wherein X is Si, x is 4 and R¹ is C₂H₅), methyltriethoxysilane (MTEOS, wherein X is Si, x is 3, R¹ is C₂H₅ and R² is CH₃), methyltrimethoxysilane, phenyltriethoxysilane, trimethoxy(3-glycidyloxypropyl)silane and triethoxy(3-glycidyloxypropyl)silane. Other equivalent silanes known to the skilled person may however also be used.

Alternatively, yet advantageously, the inorganic alkoxy compound is a Ti-based alkoxy compound. Non-limiting examples of Ti-based inorganic alkoxy compounds include tetramethoxytitanium (TMOT, wherein X is Ti, x is 4 and R¹ is CH₃), tetraethoxytitanium (TEOT, wherein X is Ti, x is 4 and R¹ is C₂H₅) and methyltriethoxytitanium (MTEOT, wherein X is Ti, x is 3, R¹ is C₂H₅ and R² is CH₃, tetraisopropoxytitanium and tetrabutoxytitanium. Other equivalent titanium-based alkoxy compounds known to the skilled person may however also be used.

It will be understood that two or more different inorganic alkoxy compounds can be dissolved in the aqueous solution. For example, a combination of tetraethoxysilane and methyltriethoxysilane can be used, or a combination of one or more silane based inorganic alkoxy compounds and one or more Ti-based inorganic alkoxy compounds.

Advantageously, the first alcohol comprises a single hydroxyl group (-OH), i.e., is a mono-alcohol. The inventors have found that when the first alcohol comprises two or more hydroxyl groups, i.e., is a di-alcohol or a poly-alcohol, besides the desired hydrolysis reaction, there is a risk to polymerisation of the first alcohol and cross-linking of the thus formed polymers (the polyalcohol starts to condense), leading to an ink that is less stable than when the first alcohol is a mono-alcohol.

The first alcohol has a surface tension equal to or lower than 30 mN/m, preferably equal to or less than 25 mN/m, more preferably equal to or lower than 24 mN/m, most preferably equal to or lower than 23 mN/m at 20 °C and standard atmospheric pressure. The surface tension is advantageously measured according to standard ASTM D971.

Preferred examples of the first alcohol include methanol, ethanol, iso-propanol, n-butanol, and combinations of two or more thereof. The aqueous solution can thus comprise two or more (different) first alcohols.

During the dissolution operation, a first solution is formed. The first solution comprises the first alcohol, the dissolved inorganic alkoxy compound and, when the aqueous solution comprises an acid, the acid, wherein all compounds are as described hereinabove. Since the first solution is obtained from the acidic aqueous solution, it is also acidic, i.e., has a pH lower than 7.

It will be understood that the pH of the first solution is defined by, i.e. determined by, influenced by, the pH of the aqueous solution. Advantageously, the pH of the aqueous solution and the first solution are substantially the same.

Advantageously, the molar ratio of the inorganic alkoxy compound and the first alcohol in the first solution is between 1:1 and 1:20, preferably between 1:1 and 1:10, more preferably between 1:2 and 1:5.

In the present disclosure, the amount, in moles, of the inorganic alkoxy compound is the sum of the amount, in moles, of the or each inorganic alkoxy compound, when there are two or more inorganic alkoxy compounds.

In the present disclosure, the amount, in moles, of the first alcohol is the sum of the amount, in moles, of the or each first alcohol, when there are two or more first alcohols.

Advantageously, the molar ratio of the inorganic alkoxy compound and water in the first solution is between 1:1 and 1:10, preferably between 1:1 and 1:5, more preferably between 1:2 and 1:5.

Advantageously, in the first solution, the molar ratio of the inorganic alkoxy compound and the first alcohol is between 1:2 and 1:5 and the molar ratio of the inorganic alkoxy compound and water is between 1:2 and 1:4.

For example, without being limited thereto, the inorganic alkoxy compound, the first alcohol and water can be present in the first solution in a molar ratio between 1:2:2 and 1:5:4, for example between 1:3:2 and 1:3:4.

During the hydrolysis operation, at least one, and advantageously all, of the alkoxy groups of the inorganic alkoxy compound react with water molecules in the first solution and are hydrolysed.

During that reaction, a second alcohol having the formula R'OH is formed as by-product. The second alcohol has a second surface tension, and it will be understood that the second surface tension depends on R¹ of the inorganic alkoxy compound. Advantageously, the second surface tension is equal to or lower than 30 mN/m, preferably equal to or lower than 28 mN/m, more preferably equal to or lower than 25 mN/m, most preferably equal to or lower than 23 mN/m at 20 °C and standard atmospheric pressure, wherein the surface tension is measured as described hereinabove.

Advantageously, the first alcohol does not participate in the hydrolysis reaction. The hydrolysis operation leads to the formation of a hydrolysed first solution comprising the first alcohol, the second alcohol and the at least partially, and preferably entirely, hydrolysed inorganic alkoxy compound.

Without being limited thereto, the inventors found that the presence of a first alcohol in the first solution allows to control the hydrolysis reaction. Additionally, the inventors believe that the first alcohol contributes to improving the homogeneity of the distribution of the hydrolysed inorganic alkoxy compound in the hydrolysed first solution. The distribution of the hydrolysed inorganic alkoxy compound in the hydrolysed first solution is found to contribute to the stability of the ink.

The metal salt addition operation comprises the addition of a metal salt to the hydrolysed first solution. Advantageously, the metal salt comprises a salt of one or more of Ni, Co, Fe, Pd, Ru, Cu, Zn, Mn, W, Mo, Pt, Ag, Au, or Na. Advantageously, the metal salt is a nitrate, an acetate, a sulphate, a chloride or a carbonate. Non-limiting examples of metal salts include NaCl, NiCl₂, NiSO₄, Fe(NO₃)₂, Fe(NO₃)₃, CuSO₄, Cu(CH₃COO)₂, PtCl₂, and PtCl₄. It will be understood that two or more different metal salts can be added to the hydrolysed first solution.

Advantageously, the metal salt dissolves at least partially, and preferably substantially entirely, in the hydrolysed first solution. Advantageously, at least 20 % by weight, preferably at least 50 % by weight, more preferably at least 75 % by weight, most preferably at least 90 % by weight, in particularly substantially 100 % by weight of the metal salt dissolves in the hydrolysed first solution.

Upon at least partial dissolution, the metal salt is present in the hydrolysed first solution as metal ions (cations) and anions of the metal salt.

Advantageously, the metal salt is added as a dry metal salt. Alternatively, the metal salt can be added as an aqueous solution or an aqueous dispersion. It is known in the field of sol-gel technology that the amount of water is important in both the hydrolysis reaction and the later gelation and condensation. Consequently, it will be understood that when the metal salt is added as an aqueous solution or an aqueous dispersion, the molar ratio of the of the inorganic alkoxy compound and water in the first solution is to be adapted in function of the amount (moles) of water added during the metal salt addition operation.

The hydrolysis operation and the metal salt addition can be performed one after the other, or can be performed simultaneously.

The metal salt comprising hydrolysed first solution is then contacted with a solvent in a solvent exchange operation. The solvent has a surface tension higher than the (first) surface tension of the first alcohol and the (second) surface tension of the second alcohol. Consequently, the lowest surface tension that the solvent can have depends on both the first and the second surface tension, and thus on the composition of the first alcohol and R¹ of the inorganic alkoxy compound (which defines the composition of the second alcohol) thus influence what solvents can be used.

For example, if the highest value of the first surface tension and the second surface tension is close to 30 mN/m, the solvent advantageously has a surface tension equal to or higher than 30 mN/m.

For example, when the first solvent is ethanol (surface tension: 22.3 mN/m at 20 °C) and R¹ is C₄ alkyl, the second alcohol being n-butanol (surface tension 24.6 mN/m at 20 °C), it will be understood that the solvent should have a surface tension higher than 24.6 mN/m.

For example, when the first solvent is ethanol (surface tension: 22.3 mN/m at 20 °C) and R¹ is C₁₀ alkyl, the second alcohol thus being decanol (surface tension 28.0 mN/m at 20 °C), it will be understood that the solvent should have a surface tension higher than 28.0 mN/m.

Advantageously, the first alcohol and R¹ are selected so that the surface tension of the solvent can be kept low. Advantageously, the first alcohol and R¹ are selected so that the surface tension of the solvent can be equal to or lower than 30 mN/m, preferably equal to or lower than 27.5 mN/m, more preferably equal to or lower than 25.5 mN/m, most preferably equal to and lower than 25.25 mN/m, while being higher than the first surface tension and the second surface tension.

Upon contacting the metal salt comprising hydrolysed first solution with the solvent, the solvent replaces the first and the second alcohol in the first solution, thereby forming the sol-gel ink.

The solvent exchange operation allows to control and modify, in particular increase, the viscosity of the first solution. This results in a sol-gel ink having a controlled and optimal viscosity for DIW printing processes.

Advantageously, the solvent exchange operation comprises adding the solvent to the metal salt comprising hydrolysed first solution. Advantageously, the amount of solvent added is between 20 % and 80 % by weight, preferably between 25 % and 75 % by weight, more preferably between 30 % by weight and 50 % by weight, based on the weight of the metal salt comprising hydrolysed first solution prior to adding the solvent.

It is possible to add further compounds to the sol-gel ink, in particular to further optimize the properties of the sol-gel ink for DIW printing, for example its viscoelastic properties. A non-limiting example of such a further compound is a rheology modifier, for example an aerosil (fumed silica), ceramic powders, for example or SiO₂, TiO₂, ZrO₂ or Al₂O₃, or other colloidal, particulate or polymer additives (for example polydimethylsiloxane or siloxanes in general). Advantageously, the ink comprises between 0 % by weight (i.e. none) and 50 % by weight of a rheology modifier.

When the sol-gel ink comprises a further compound, for example a rheology modifier, in a particulate form (particles), it will be understood that the particle size is lower than the minimal nozzle size used during DIW printing of the sol-gel ink.

The present disclosure further relates to DIW printing of the sol-gel ink. To this end, a 3D xerogel is built, for example by depositing layers of filaments of the ink, wherein the filaments within each layer are spaced apart, and wherein adjacent layers are in contact.

The DIW printing further comprises condensing the printed 3D xerogel, thereby polymerising and cross-linking the hydrolysed inorganic alkoxy compound. Condensation can be initiated, enhanced and/or stopped by means known in the art. In particular, the 3D xerogel is exposed to an alkaline environment, advantageously an ammonia environment, to increase the condensation reaction.

The condensed 3D xerogel is subjected to a thermal treatment, thereby obtaining the 3D catalyst scaffold. The 3D catalyst scaffold comprises metal ions of the metal salt as catalytically active sites and, depending on the metal of the metal salt, magnetically active sites. Advantageously, the metal ions are dispersed in the 3D catalyst scaffold, in particular in the bulk phase of the filaments. Advantageously, the metal ions are present in the 3D catalyst scaffold in the form of particles. The inventors have found that the sol-gel inks made by the methods of the present invention allow for homogeneously and finely dispersed metal ions in the 3D catalyst scaffold. Advantageously, the 3D catalyst scaffold also comprises anions of the metal salt. Advantageously, the anions are dispersed at the surface of the filaments of the 3D catalyst scaffold.

Advantageously, the thermal treatment comprises calcining and/or sintering and/or reduction of the condensed 3D xerogel.

Advantageously, the thermal treatment comprises heating the condensed 3D xerogel to a temperature between 400 °C and 800 °C, preferably between 500 °C and 700 °C, for example 600 °C.

The thermal treatment advantageously converts remaining surface metal hydroxide groups to metal oxides when performed in an oxidising environment for example in air, or may give rise to a reduction of the metal oxides to a lower oxidation state or the metallic state if performed in a reducing atmosphere, for example a mixture of inert gas and a reducing gas, for example H₂.

After having been printed, the condensed 3D xerogel is heated at heating rates known in the art for calcination and/or sintering and/or reduction. Advantageously, the heating rate is between 1 °C and 100 °C, preferably between 1 °C and 50 °C, more preferably between 1 °C and 10 °C.

### Example

A first solution was prepared by dissolving tetraethoxysilane (TEOS) in an aqueous solution comprising ethanol as the first alcohol and HNO₃ (acid). The molar ratio of TEOS:ethanol:water:HNO₃ was 1:3:2:0.0085, and the first solution had a pH of 2. Upon dissolution of the TEOS, it was hydrolysed and ethanol was formed as the second alcohol.

Three metal nitrate salts were tested: Ni(NO₃)₂, CO(NO₃)₂ and FeCo(NO₃)₄. Their amounts (vs. the weight of the hydrolysed first solution prior to adding the metal salt) are listed in Table 1. The nitrate salts were each separately to a portion of the hydrolysed first solution in varying amounts. Five nitrate salt comprising hydrolysed first solutions were as such prepared, and where then contacted with 1-hexanol (solvent). The amount of 1-hexanol added vs. the weight of the metal salt comprising hydrolysed first solutions is also listed in Table 1. The amount of hexanol added was selected such as to minimise the risk of gelation on the one hand and to obtain the desired viscosity for 3D-printing on the other hand. Upon contacting the solution with the 1-hexanol, the ethanol (first and second alcohol) were exchanged for 1-hexanol in the solutions, thereby obtaining sol-gel inks.

**Table 1: Materials used to prepare five inventive sol-gel inks**

| **Ink No.** | **Metal salt** | **Amount of metal salt** | **Amount of 1-hexanol** |
|---|---|---|---|
| 1 | Ni(NO₃)₂ | 7,6 wt.% | 64,7 wt.% |
| 2 | Ni(NO₃)₂ | 24 wt.% | 53 wt.% |
| 3 | Co(NO₃)₂ | 7,2 wt.% | 65 wt.% |
| 4 | Co(NO₃)₂ | 7,2 wt.% | 65 wt.% |
| 5 | FeCo(NO₃)₄ | 16 wt.% | 58,7 wt.% |

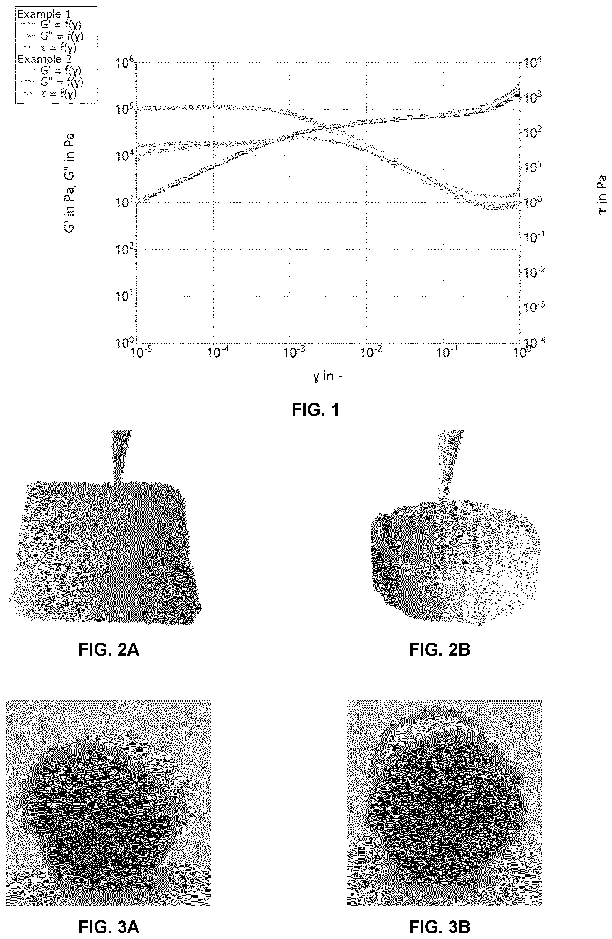

The rheological properties of ink Nos. 1 and 2 were measured by dynamic oscillatory measurements using a Haake Mars 60 Rheometer with a plate-plate configuration and a gap of 1 mm. Fig. 1 shows the elastic (storage) modulus (G'), plastic (loss) modulus (G")' and shear stress ("τ ") as a function of sheer deformation ("γ"), where "Example 1" and "Example 2" refer to inks No. 1 and 2, respectively. G' and G" are a measure for the presence of viscous components and elastic components in the ink, respectively. From Fig. 1 it is clear that the inks show a viscoelastic behaviour that is required for inks for DIW printing.

The inks were printed by three-dimensional DIW printing. Figs. 2A and 2B show two freshly printed (i.e., not yet condensed) nickel loaded silica sol-gel derived monoliths obtained from ink No. 1 and having different geometries.

Afterwards, the printed xerogels were allowed to dry at room temperature in an ammonia environment for 5 days to gelate and condensate the printed xerogels. The condensed xerogels were then calcined and sintered by heating them to 600 °C at a heating rate of 30 °C/h. The % by weight of the catalytic metal (Ni, Co, and Fe+ + Co, respectively) in the five catalyst scaffolds obtained from inks Nos. 1-5, respectively, based on the weight of the catalyst scaffold, were as follows: 1.11 %, 4.4 %, 1.13 %, 1.45 %, and 1.41 % Fe + 1.36 % Co.

Fig. 3A shows the three-dimensional DIW printed nickel loaded silica sol-gel derived monoliths obtained with ink No. 1 after gelation in NH₃ atmosphere. Fig. 3B shows the same monolith after calcination and sintering.

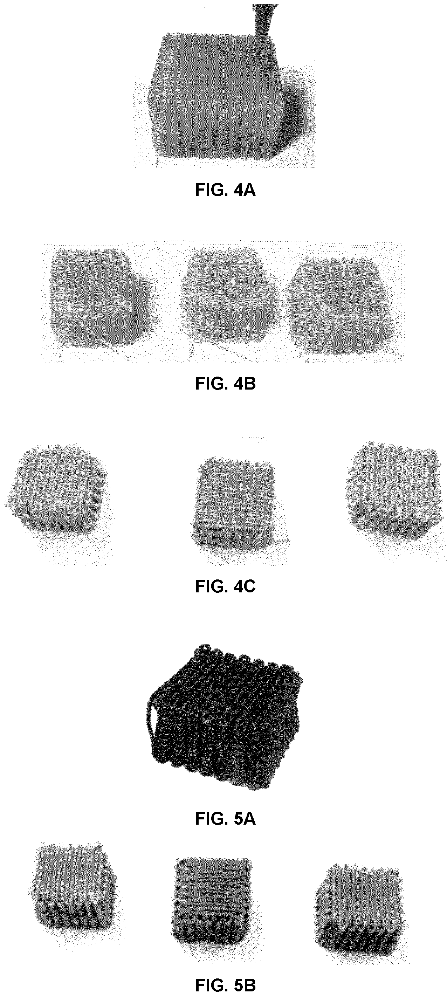

Figs. 4A-C show three-dimensional DIW printed cobalt loaded xerogel monoliths obtained with ink No. 3 after drying in air, after thermal treatment in air and after thermal treatment in a H₂/He atmosphere, respectively.

Figs. 5A and 5B show three-dimensional DIW printed FeCo loaded xerogel monoliths obtained with ink No. 5 after drying in air and after thermal treatment in air, respectively.

Scanning electron microscopy (SEM) combined with Energy-Dispersive X-ray Spectroscopy (EDX) was performed using a FEI NOVA NanoSEM 450 system on 3D printed nickel loaded silica xerogels obtained with inks Nos. 1 and 2 and 3D printed cobalt loaded silica xerogels obtained with ink No. 3.

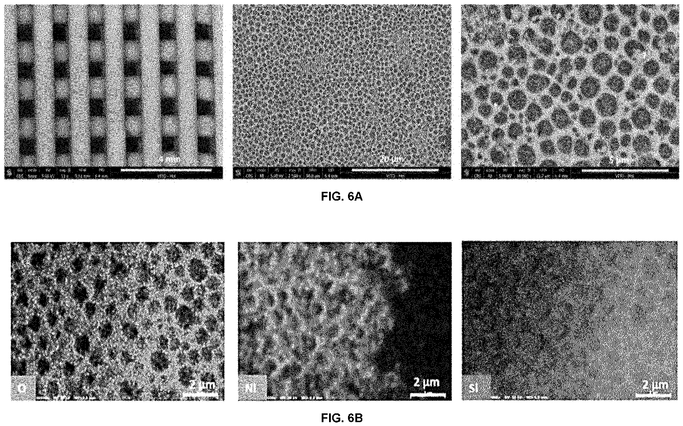

Figs. 6A and 6B relate to the xerogel obtained with ink No. 1. Fig. 6A shows SEM images showing typical morphology and microstructure at different magnitudes. It follows from the SEM images that the printed filaments show a high surface area. Fig. 6B shows the EDX images of the elemental (phase) distribution of oxygen (left), Ni (middle) and Si (right) for the same xerogel, indicating a very homogeneous distribution.

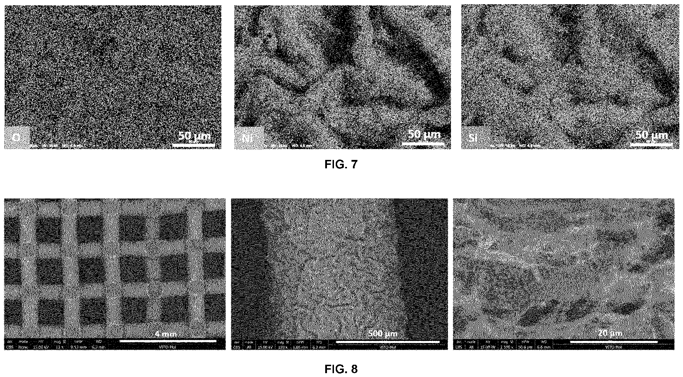

Fig. 7 relates to the xerogel obtained with ink No. 2 and shows the EDX images of the elemental (phase) distribution of oxygen (left), Ni (middle) and Si (right), indicating a very homogeneous distribution.

Fig. 8 relates to the xerogel obtained with ink No. 3 and shows SEM images with typical morphology and microstructure at different magnitudes.

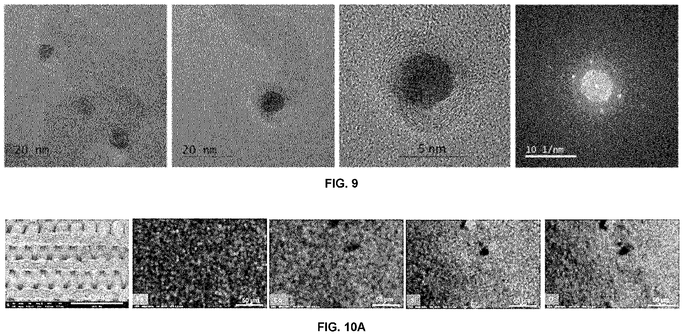

Fig. 9 shows HRTEM (High Resolution Transmission Electron Microscopy) images of the 3D printed nickel loaded silica xerogel obtained with ink No. 1. The images indicate at the nanoscale the presence of highly dispersed nickel nanoparticles with lattice fringes visible corresponding to d-spacing values (lattice spacings/interatomic planes). The right image can be matched with standard reference patterns. The images were obtained using a JEM-2200FS instrument.

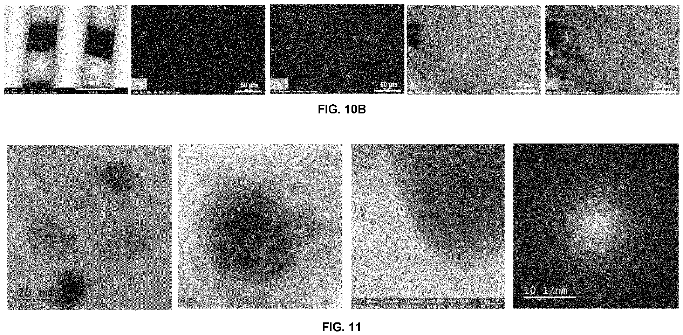

SEM and EDX analysis was also performed on 3D printed FeCo loaded silica xerogel catalyst monoliths obtained with ink No. 5. One monolith was prepared by heating the monolith to 550 °C post printing in a flow of H₂ and He, and the SEM (left) and EDX images (other four images) thereof are shown in Fig. 10A, indicating a very homogeneous distribution of both Fe and Co. Fig. 10B shows the SEM (left) and EDX images (other four images) of the monolith of Fig. 10A after use in a model selective oxidation reaction, and demonstrate post reaction mechanical and chemical integrity.

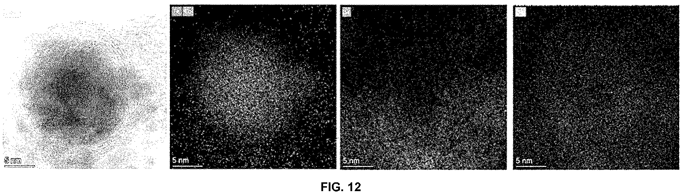

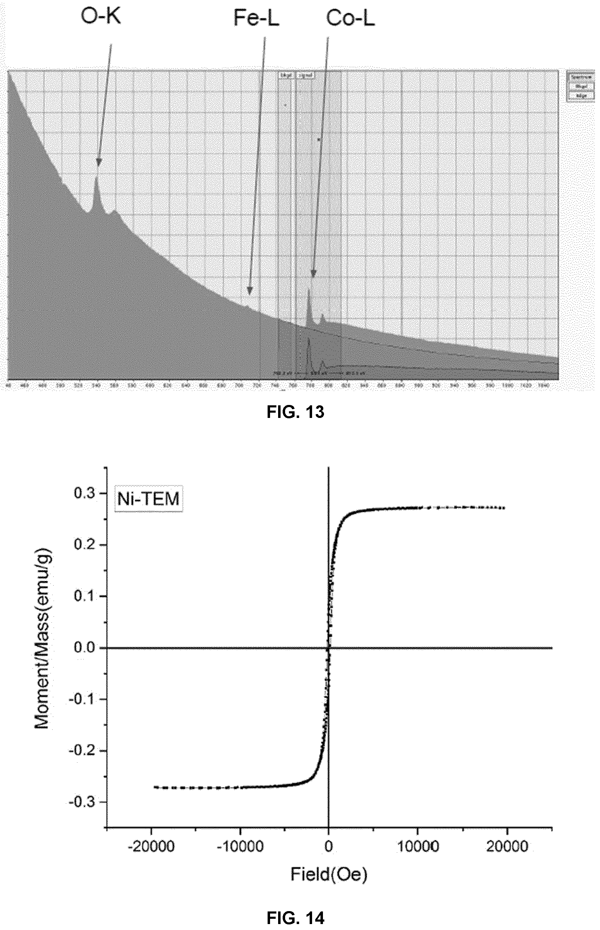

Fig. 11 shows HRTEM images of the 3D printed FeCo loaded silica xerogel catalyst monolith obtained with ink No. 5. The images indicate at the nanoscale the presence of highly dispersed FeCo nanoparticles with lattice fringes visible corresponding to d-spacing values (lattice spacing/interatomic planes). The right image can be matched with standard reference patterns. Fig. 12 shows STEM (Scanning Transmission Electron Microscopy) images coupled with EDX for the 3D printed FeCo loaded silica xerogel catalyst monolith of Fig. 11 (obtained with ink No. 5). The images show single Fe and Cobalt particles at the nanoscale, suggesting a homogenous dispersion of nanoparticles. The images were obtained using a ThermoFisher Spectra 200 scanning transmission electron microscope fitted with the energy dispersive X-ray (EDX) and electron energy loss spectroscopy (EELS) detectors. Fig. 13 shows the EELS measurement, which confirms the STEM images of Fig. 11. This measurement was obtained using the same ThermoFisher Spectra 200 scanning transmission electron microscope as for the images of Fig. 12.

Vibrating sample magnetormeter (VSM) measurements were performed, using a VSM (Vibrating Sample Magnetometer) model LakeShore 7410, on the 3D printed nickel loaded sol-gel monolith obtained with ink No. 1. Fig. 14 shows the hysteresis curve obtained from magnetic hysteresis measurement and shows a distinct ferromagnetic response saturating easily at a field below 2T, which indicates that the composition of ink No. 1 may give rise to the formation of a soft magnetic material with a higher coercivity. Such a soft magnetic material can be widely employed as reversible magneto-active composite, since they can easily be magnetized and demagnetized when subjected to an external magnetic field.

## Claims

1. A method for preparing a sol-gel ink for direct ink writing (DIW) printing, comprising:
- dissolving an inorganic alkoxy compound according to formula (I)
X(OR¹)ₓR²₄₋ₓ (I),
wherein
X is Si, Ti, Zr, Al or Ce,
R¹, individually, is C₁₋₁₀ alkyl, preferably C₁₋₆ alkyl, more preferably methyl or ethyl,
R², individually, is C₁₋₁₀ alkyl, (CH₂)ₙ-O-CH₂-CH(O)CH₂, wherein n is between 1 and 10, or phenyl, preferably C₁₋₆ alkyl, more preferably methyl or ethyl, and x is between 1 and 4,
in an aqueous solution having a pH lower than 7, thereby forming a first solution having a pH lower than 7, wherein the pH is measured according to ASTM E70, wherein the aqueous solution comprises a first alcohol having a first surface tension lower than 30 mN/m at 20 °C and standard atmospheric pressure as measured according to standard ASTM D971,
- at least partially hydrolysing the inorganic alkoxy compound, thereby forming a hydrolysed first solution comprising a second alcohol according to R'OH and having a second surface tension,
- adding a metal salt to the hydrolysed first solution, and
- contacting the metal salt comprising hydrolysed first solution with a solvent having a surface tension higher than the first surface tension and the second surface tension, thereby forming the sol-gel ink comprising the solvent, wherein metal ions of the metal salt are dispersed in the ink.

2. The method according to claim 1, wherein the metal salt comprises one or more of Ni, Co, Fe, Pd, Ru, Cu, Zn, Mn, W, Mo, Pt, Ag, Au, or Na.

3. The method according to any one of the preceding claims, wherein the metal salt is a nitrate, an acetate, a sulphate, a chloride or a carbonate.

4. The method according to any one of the preceding claims, wherein between 0.5 % and 20 % by weight, preferably between 1 % and 10 % by weight, of the metal salt is added to the hydrolysed first solution, based on the total weight of the hydrolysed first solution prior to adding the metal salt.

5. The method according to any one of the preceding claims, wherein the inorganic alkoxy compound is X(OR¹)₃R², wherein X is Si or Ti, R¹ is methyl, ethyl, isopropyl or n-butyl, and R² is methyl, ethyl, 3-glycidyloxypropyl or phenyl.

6. The method according to any one of the preceding claims, wherein the molar ratio of the inorganic alkoxy compound according to formula (I) and the first alcohol in the first solution is between 1:1 and 1:20, preferably between 1:1 and 1:10, more preferably between 1:2 and 1:5.

7. The method according to any one of the preceding claims, wherein the molar ratio of the inorganic alkoxy compound according to formula (I) and water in the first solution is between 1:1 and 1:10, preferably between 1:1 and 1:5, more preferably between 1:2 and 1:5.

8. The method according to any one of the preceding claims, wherein the first alcohol is methanol, ethanol, iso-propanol, or combinations of two or more thereof.

9. The method according to any one of the preceding claims, wherein the aqueous solution comprises an acid, preferably wherein the acid is HNO₃.

10. The method according to any one of the preceding claims, wherein the solvent has a boiling temperature equal to or higher than 80 °C at standard atmospheric pressure.

11. The method according to any one of the preceding claims, wherein the solvent is 1-hexanol, propylene carbonate or tetraethylene glycol dimethyl ether.

12. A method for direct ink writing (DIW) printing of a catalyst scaffold comprising:
- preparing a sol-gel ink by the method of any one of the preceding claims, wherein metal ions of a metal salt are dispersed in the sol-gel ink,
- building a 3D xerogel in a layered fashion from the sol-gel ink, comprising stacking layers of filaments of the sol-gel ink, wherein filaments of the sol-gel ink within one layer are deposited at a distance from each other, thereby forming (macro)pores between the filaments, and wherein filaments of consecutive layers being connected to each other at one or more connection points,
- exposing the 3D xerogel to an alkaline environment, thereby condensing the 3D xerogel, and
- calcining and/or sintering the condensed 3D xerogel, thereby obtaining the 3D catalyst scaffold, wherein the catalyst scaffold comprises the metal of the metal salt as catalytically active sites.

13. The method according to claim 12, wherein the alkaline environment is air comprising equal to or lower than 25 ppm, preferably equal to or lower than 20 ppm of NH₃, wherein the NH₃ is present as vapour.

14. A sol-gel ink comprising a solvent, metal ions dispersed in the ink, and a hydrolysed inorganic alkoxy compound according to formula (II)
X(OR¹)_{x-z}(OH)_{z}R²₄₋ₓ (II),
wherein
X is Si, Ti, Zr, Al or Ce,
R¹, individually, is C₁₋₁₀ alkyl, preferably C₁₋₆ alkyl, more preferably methyl or ethyl,
R², individually, is C₁₋₁₀ alkyl, (CH₂)ₙ-O-CH₂-CH(O)CH₂ or phenyl, wherein n is between 1 and 10, preferably C₁₋₆ alkyl, more preferably methyl or ethyl,
x is between 1 and 4, and
z is between 1 and x,
**characterised in that** the solvent has a surface tension higher than a surface tension of a first alcohol and higher than a surface tension of a second alcohol, wherein the first alcohol has a surface tension lower than 30 mN/m at 20 °C and standard atmospheric pressure as measured according to standard ASTM D971, and wherein the second alcohol is according to R'OH.

15. Use of the sol-gel ink obtained by the method of any one of claims 1 to 12 or the sol-gel ink of claim 14 for DIW printing of a 3D catalyst scaffold.
